# EUROPEAN PATENT APPLICATION

(11) **EP 3 104 363 A1**
(43) Date of publication of application: **14.12.2016**
(21) Application number: 15191188.0
(22) Date of filing: 23.10.2015
(51) Int. Cl.: G09B 29/10, G08G 1/16

(54) **METHOD OF SHARING TRAFFIC ACCIDENT INFORMATION AND MOBILE TERMINAL FOR THE SAME**

(30) Priority: 08.06.2015 KR 20150080725
(71) Applicant: LG Electronics Inc., Seoul 07336 (KR)
(72) Inventor: JEONG, Jaewoo, 06772 Seoul (KR)
(74) Representative: Ter Meer Steinmeister & Partner

(57) **Abstract**

A mobile terminal (100) including a wireless communication unit (110) configured to communicate with at least one other terminal through a server; a position location module (115) configured to detect a current location of the mobile terminal (100); a touchscreen (151); and a controller (180) configured to enter a driving mode and display a navigation screen including a route guide map on the touchscreen (151), receive an traffic report through the server from the at least one other terminal, said traffic report including a location of an accident on the route guide map, and display a location indicator indicating the location of the accident on the route guide map based on the received traffic. Further, the location indicator is displayed with a display characteristic representing a reliability of the traffic report received from the at least one other terminal.

## Description

This application claims the benefit of earlier filing date and right of priority to Korean Application No. 10-2015-0080725, filed on June 8, 2015, the contents of which are hereby incorporated by reference herein in their entirety.

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for sharing traffic accident information between car drivers.

### Discussion of the Related Art

Through a navigation device of a car or a navigation application of a smartphone, a car driver is provided with various driving related information as well as with a simple route guide. For instance, the car driver can be provided with road traffic information (e.g., a real-time traffic volume, a road construction spot, a traffic accident occurrence spot, etc.) together with the route guide. Since such road traffic information is necessary information that should be taken into consideration in order for a car driver to arrive at a destination quickly, it is preferable that the road traffic information needs to be shared as quickly as possible.

However, regarding the currently provided sharing of the road traffic information, a prescribed traffic information service provider acquires information on a road construction spot or a traffic accident spot and then shares the acquired information only. According to this method, since it takes a considerable time for the traffic information service provider to acquire and forward information, it causes a problem that the acquired information is not shared quickly.

Also, it is difficult to solve the above-mentioned problem despite that the road traffic information should be necessarily shared by real time due to the property of the corresponding information. Moreover, although the road traffic information is shared among car drivers, it causes another problem of information reliability. For instance, one car driver may deliver inaccurate information to another car driver for fun or by mistake. Thus, the demands for a control method of facilitating the sharing of road traffic information between car drivers and the determination of the reliability of the shared information are increasingly rising.

### SUMMARY OF THE INVENTION

Accordingly, an object of the present invention is to address the above-noted and other problems. In particular, embodiments of the present invention are directed to a mobile terminal and controlling method thereof that substantially obviate one or more problems due to limitations and disadvantages of the related art.

One object of the present invention is to provide a mobile terminal and controlling method thereof, by which reliability of information can be determined in case of sharing accident information between car drivers.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to one embodiment of the present invention may include a wireless communication unit configured to communicate with a server for sharing a road traffic information, a touchscreen configured to output a route guide map of a car, and a controller controlling the touchscreen to output an indicator indicating a specific accident spot on the route guide map based on the road traffic information received from the server, wherein the indicator is displayed differently depending on a reliability of the road traffic information corresponding to the specific accident spot.

In another aspect of the present invention, as embodied and broadly described herein, a method of controlling a mobile terminal according to another embodiment of the present invention may include the steps of communicating with a server for sharing a road traffic information, outputting a route guide map of a car, and outputting an indicator indicating a specific accident spot on the route guide map based on the road traffic information received from the server, wherein the indicator is displayed differently depending on a reliability of the road traffic information corresponding to the specific accident spot.

Effects obtainable from the present invention may be non-limited by the above mentioned effect. And, other unmentioned effects can be clearly understood from the following description by those having ordinary skill in the technical field to which the present invention pertains. It is to be understood that both the foregoing general description and the following detailed description of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 2 is a flowchart for a control method of sharing road traffic information with another terminal according to one embodiment of the present invention;
FIG. 3 is a diagram illustrating a mobile terminal having entered a driving mode according to one embodiment of the present invention;
FIG. 4 is a diagram illustrating a running state of a voice command input chat window according to one embodiment of the present invention;
FIG. 5 is a diagram illustrating one example of automatically uploading a black box image together in case of uploading an SNS posting 404 according to one embodiment of the present invention;
FIG. 6 is a diagram illustrating a control method of outputting a road traffic information allowed to be shared according to one embodiment of the present invention;
FIG. 7 is a diagram illustrating one example of road traffic information displayed on a navigation map according to one embodiment of the present invention;
FIG. 8 is a diagram illustrating one example of marking a size and reliability of a pinpoint according to one embodiment of the present invention;
FIG. 9 is a diagram illustrating a control method of evaluating accuracy in a reader side terminal according to one embodiment of the present invention;
FIG. 10 is a diagram illustrating one example of identifiably displaying a road traffic information uploaded through a specific account according to one embodiment of the present invention;
FIG. 11 is a diagram illustrating one example of an indicator indicating whether an accident occurs on a road toward a prescribed direction on a navigation map 703 according to one embodiment of the present invention;
FIG. 12 is a diagram illustrating a control method of sharing a road traffic information on accident disposal according to one embodiment of the present invention;
FIG. 13 is a diagram illustrating a control method of receiving a road traffic information based on a road traffic broadcast output through a radio of a car according to one embodiment of the present invention;
FIG. 14 is a diagram illustrating configuration of a control method of uploading travel information easily according to one embodiment of the present invention; and
FIG. 15 is a flowchart diagram illustrating a control method of uploading information on an accident automatically in case of detection of an occurrence of the corresponding accident according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like. By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

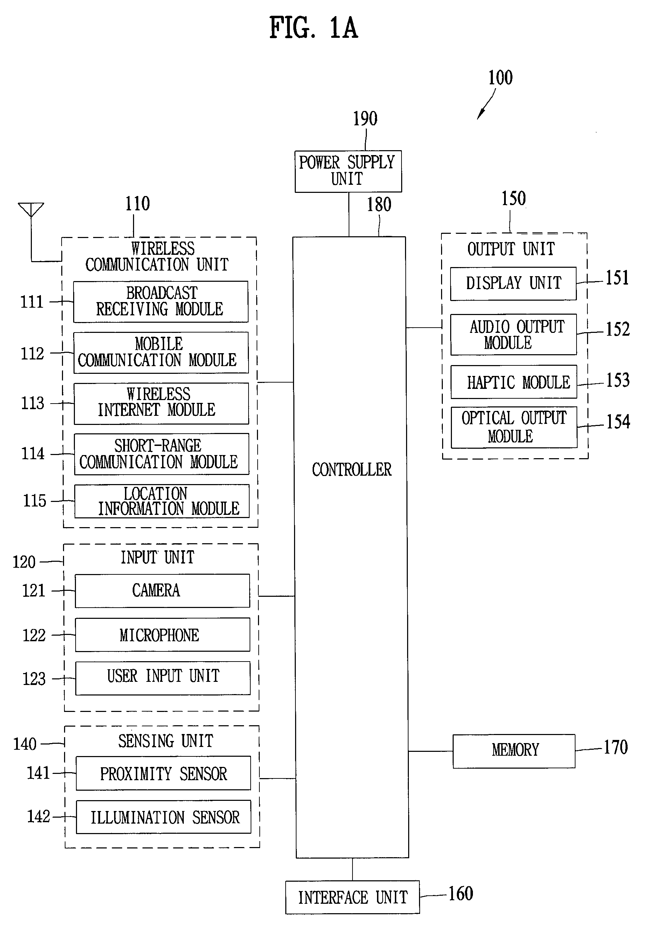

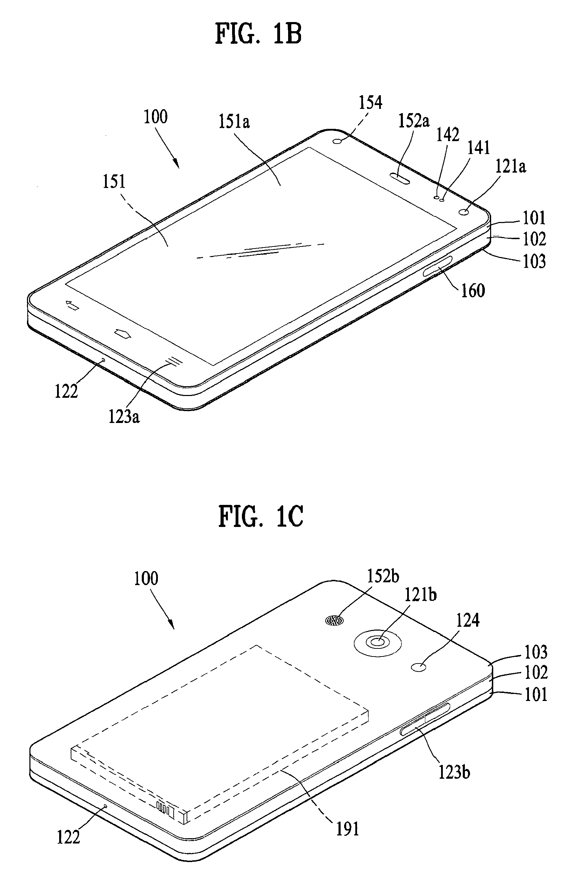

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 processes signals, data, information and the like input or output through the above-mentioned components and/or runs application programs saved in the memory 170, thereby processing or providing a user with appropriate information and/or functions.

The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least one portion of the respective components mentioned in the foregoing description can cooperatively operate to embody operations, controls or controlling methods of the mobile terminal according to various embodiments of the present invention mentioned in the following description. Moreover, the operations, controls or controlling methods of the mobile terminal can be embodied in the mobile terminal by running at least one or more application programs saved in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this instance, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies. Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may be provided with the display unit 151, the first audio output unit 152a, the second audio output unit 152b, the proximity sensor 141, the illumination sensor 142, the optical output unit 154, the first camera 121a, the second camera 121b, the first manipulating unit 123a, the second manipulating unit 123b, the microphone 122, the interface unit 160, and the like.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170. The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds. The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A (Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT. Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module. The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the preestablished database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database. A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter. In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

In the following description, controlling methods implemented in the above-configured mobile terminal according to embodiments of the present invention are explained with reference to the accompanying drawings. It will be appreciated by those skilled in the art that various modifications and variations can be made in the present invention without departing from the spirit or scope of the inventions.

According to one embodiment of the present invention, a control method of facilitating traffic accident information to be shared between car drivers, a terminal for the same, and a system thereof is provided. Through a navigation device of a car or a navigation application of a smartphone, a car driver is provided with various driving related information as well as with a simple route guide. For instance, the car driver can be provided with road traffic information (e.g., a real-time traffic volume, a road construction spot, a traffic accident occurrence spot, etc.) together with the route guide. Since such road traffic information is useful information that should be taken into consideration in order for a car driver to arrive at a destination quickly, it is preferable that the road traffic information is shared as quickly as possible.

However, regarding the currently provided sharing of the road traffic information, a prescribed traffic information service provider acquires information on a road construction spot or a traffic accident spot and then shares the acquired information only. According to this method, since it takes a considerable time for the traffic information service provider to acquire and forward information, the acquired information is not shared quickly.

In addition, it is difficult to solve the above-mentioned problem despite that the road traffic information should be shared by real time due to the property of the corresponding information. Therefore, according to one embodiment of the present invention, in order to solve the above-described problems, provided is a control method of sharing the above-mentioned information between car drivers, a terminal for the same, and a system thereof.

The above-method has another problem of information reliability. Namely, one car driver may deliver inaccurate information to another car driver for fun or by mistake. Therefore, according to one embodiment of the present invention, provided is a control method for a car driver to determine the reliability of the information with ease.

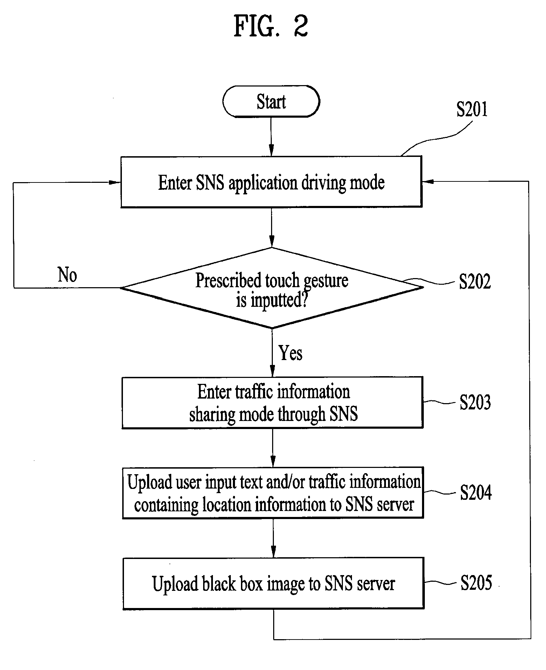

Next, FIG. 2 is a flowchart for a control method of sharing road traffic information with another terminal according to one embodiment of the present invention. Referring to FIG. 2, it is assumed that a separate SNS application for SNS (social network service) is installed in the mobile terminal 100 according to one embodiment of the present invention. In this instance, the SNS corresponds to a service for sharing text data and image data with other users by uploading the text data and the image data uploaded to a separately provided server. According to one embodiment of the present invention, provided is a control method for sharing road traffic information quickly and conveniently based on the SNS.

In a step S201, the controller 180 switches a running state of an SNS application to a driving mode from a normal mode. According to one embodiment of the present invention, the driving mode and the normal mode are distinguished from each other and a road traffic information sharing function is activated on entering the driving mode. The reason for this is described as follows. First of all, the mobile terminal shares the road traffic information by uploading a posting to an SNS server automatically. Secondly, invasion of privacy may occur due to location information and the like if a current state is not a driving state. This is described in detail later.

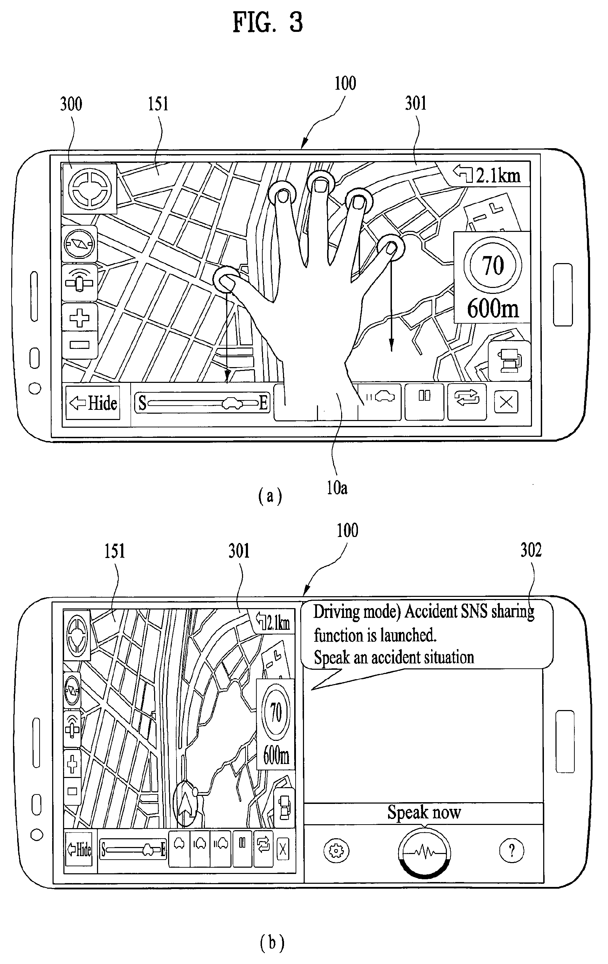

Therefore, according to one embodiment of the present invention, the mobile terminal 100 determines a driving state of a car based on a detection signal from an OBF (on-board diagnostics) terminal of a car or a signal from a black box device separately installed in the car and then enters a driving mode based on the determined driving state of the car. An operation in the driving mode is described in detail with reference to FIG. 3 as follows.

FIG. 3 is a diagram illustrating a mobile terminal having entered a driving mode according to one embodiment of the present invention. Referring to FIG. 3 (a), the mobile terminal 100 outputs a navigation guide screen 301. In this instance, the navigation guide screen 301 outputs a route guide map and a guide route for a car to a destination set by a user through the touchscreen 151 and outputs a route guide voice in audio form through the audio output unit 152.

According to one embodiment of the present invention, if a driving mode is entered, an indicator 300, which is provided to indicate that the driving mode has been entered, is output through the touchscreen 151 (FIG. 3 (a)). Further, the mobile terminal 100 can share traffic information in response to a user's simple command only in the driving mode. The reason for this is that the car control is a top priority while driving a car. For example of the simple command, as shown in FIG. 3 (a), there is a gesture 10a of touching 5 points and then dragging in a bottom direction by holding the touch, by which the simple command is non-limited.

In a step S202, the controller 180 stands by for an input of a prescribed touch input for the above-mentioned simple command. If the prescribed touch gesture is not input (No in S202), the controller 180 goes back to the step S201. If the prescribed touch gesture is received in the step S202 (Yes in S202), the controller 180 goes to step S203.

In the step S203, the controller 180 can enter a traffic information sharing mode through SNS. In this instance, the SNS traffic information sharing mode is for a user to upload an SNS posting using a simple input. As mentioned in the foregoing description, if a user is driving a car, the car control is a top priority, one embodiment of the present invention provides an input of uploading an SNS posting as simple as possible.

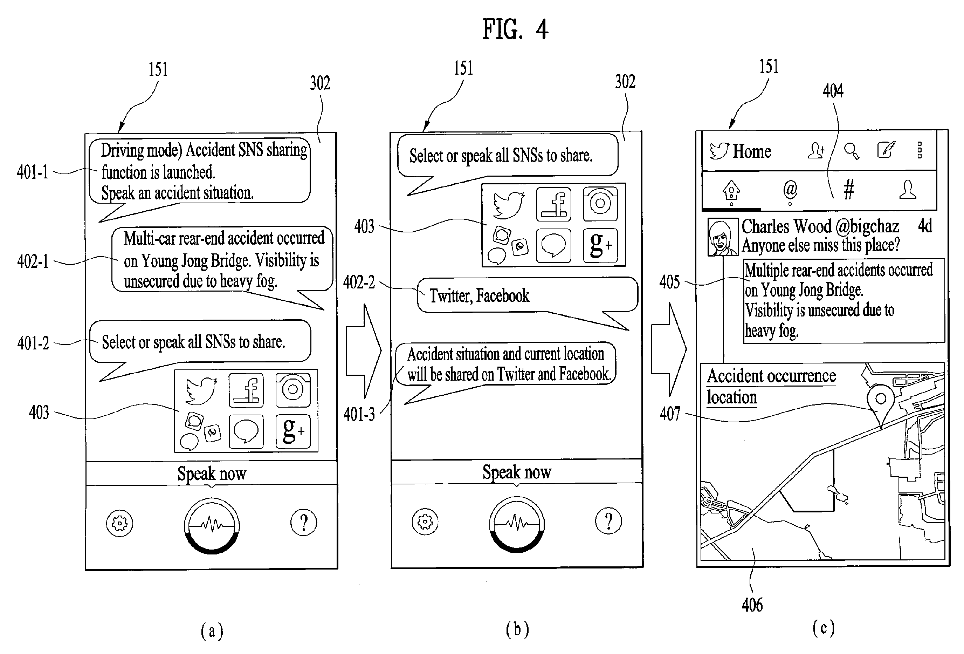

Therefore, according to one embodiment of the present invention, when an SNS traffic information sharing mode is entered, a command for uploading such information as user input text, location information, traffic information and the like to an SNS server can be using a voice command. According to one embodiment of the present invention, when an SNS traffic information sharing mode is entered, a voice command input chat window 302 can be output together with a navigation guide screen 301. The voice command input chat window 302 is described in detail with reference to FIG. 4 as follows (FIG. 3 (b)).

FIG. 4 is a diagram illustrating a running state of a voice command input chat window 302 according to one embodiment of the present invention. According to one embodiment of the present invention, the voice command input chat window 302 may include at least one guide or more guide texts 401-1, 401-2 ... and/or at least one or more user voice input texts 402-1, 402-2 .... In particular, a guide text for inducing a voice command is output through the voice command input chat window 302 and a user's voice input through the microphone 122 is recognized, whereby the recognized voice can be output as a user voice input text (FIG. 4 (a), (b)).

Referring to FIG. 4 (a), the first guide text 401-1 contains a content indicating that an SNS sharing function has been launched and a content that a voice command for an accident situation needs to be input. If a car driver inputs a voice in response to the first guide text 401-1, the mobile terminal 100 converts the voice to a text by TTS (text to speech) conversion and can then output the corresponding text as a first user voice input text 402-1. If a user's description of the accident situation and a voice command for requesting an SNS upload are received, an SNS list 403 can be output together with a second guide text 401-2 corresponding to an SNS specifying guide text for sharing. In this instance, the SNS list 403 may include a list of applications included in an SNS category among a plurality of applications currently installed in the mobile terminal 100 (FIG. 4 (c)).

If a voice command for specifying an SNS is received in response to the second guide text 401-2, the mobile terminal 100 outputs a text (i.e., a user input text) converted by TTS as a second user input voice text 402-2 and can upload a posting to the specified SNS server (S204) (FIG. 4 (c)). Further, a content of the posting can be uploaded in form of data of a text converting from a user's voice command. Looking into an SNS posting 404 shown in FIG. 4 (c), it can be observed that a content 405 of the posting is automatically composed by converting a voice command input by a user into a text.

Moreover, according to one embodiment of the present invention, when the SNS posting 404 is automatically uploaded, a current location information of the mobile terminal 100 is uploaded as well (S204). The reason for this is that an accident spot needs to be shared in case of traffic accident information. Hence, like the shared SNS posting 404 shown in FIG. 4 (c), the accident spot 407 can be output to the map 406 by posting the current location information of the mobile terminal 100 as well.

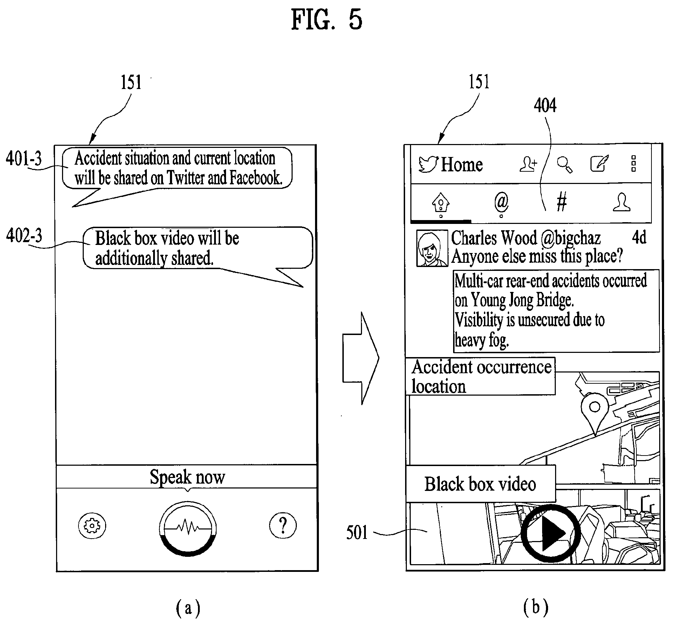

The sharing of the black box image mentioned in the step S205 is described in detail with reference to FIG. 5 as follows. In particular, FIG. 5 is a diagram illustrating one example of automatically uploading a black box image together when uploading an SNS posting 404 according to one embodiment of the present invention.

According to one embodiment of the present invention related to FIG. 5, assume that the mobile terminal 100 captures an image (e.g., a black box image) related to the driving of a car by being installed in the car or that the mobile terminal 100 can receive a black box image by being connected to a separate black box device.

According to one embodiment of the present invention, when the SNS posting 404 is uploaded, a black box image at the corresponding timing point is uploaded to an SNS server together. The reason for this is to accurately deliver an accident situation to another user who reads the corresponding SNS posting 404.

Referring to FIG. 5 (a), a third guide text 401-3 is output through the voice command input chat window 302. If a user inputs a black box image upload command with a voice through the microphone 122, the controller 180 outputs a third user voice input text generated from converting a corresponding user voice to a text and can upload a black box image at the corresponding timing point to the SNS server. In this instance, the black box image at the corresponding timing point may mean a black box image corresponding to a period of a preset time before and after a timing point at which a prescribed touch gesture is input.

FIG. 5 (b) is a diagram illustrating one example of an output screen of the SNS posting 404 described with reference to FIG. 4. The SNS posting 404 may further contain a play screen 501 of the uploaded black box image. According to the embodiments described with reference to FIGs. 2 to 5, the control method in a side of a sharer who allows a road traffic information to be shared. According to an embodiment mentioned in the following description, a control method in a side of a reader with whom the road traffic information is shared is described.

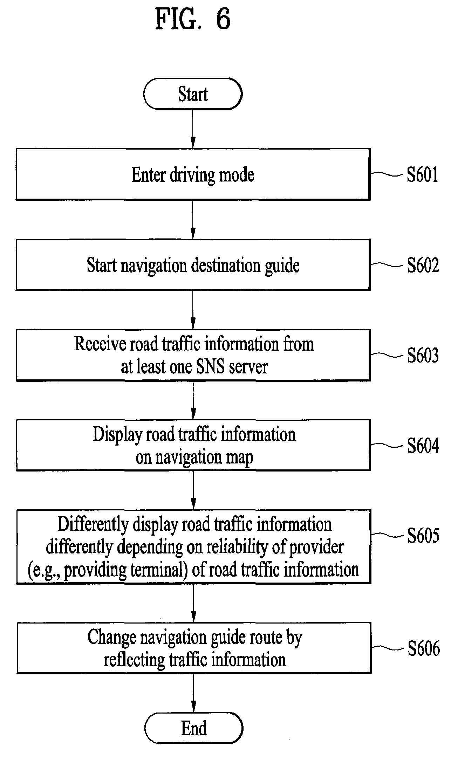

FIG. 6 is a diagram illustrating a control method of outputting a road traffic information allowed to be shared according to one embodiment of the present invention. Referring to FIG. 6, in a step S601, the mobile terminal 100 enters a driving mode. The driving mode in the step S601 is similar to that in the step S201.

In a step S602, the mobile terminal 100 starts the navigation guide to a destination set by a user. In this instance, the navigation guide outputs a navigation map with reference to a current location of the mobile terminal 100 and may contain a route to the destination displayed on the map.

In a step S603, the mobile terminal 100 receives the road traffic information described with reference to the flowchart shown in FIG. 2 from at least one SNS server. In this instance, according to one embodiment of the present invention, all road traffic information received from a plurality of SNS servers is collected as well as the road traffic information received from a prescribed SNS server. The collected road traffic information may affect the reliability of the corresponding information mentioned in detail in the following description.

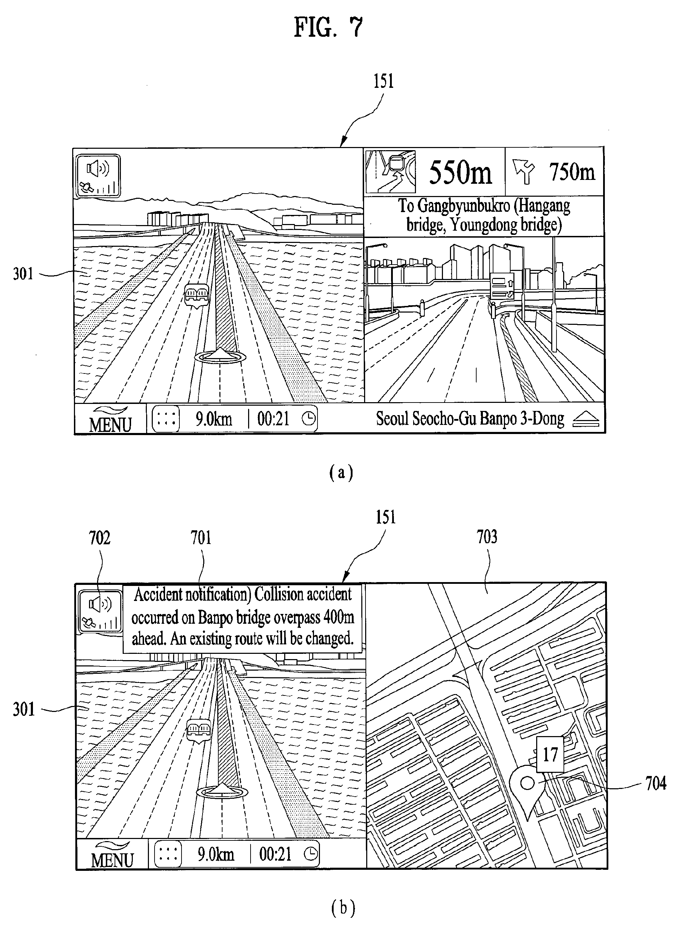

In a step S604, the controller 180 controls the received road traffic information to be displayed on the navigation map. Such an embodiment is described in detail with reference to the diagram shown in FIG. 7 as follows. In particular, FIG. 7 is a diagram illustrating one example of road traffic information displayed on a navigation map according to one embodiment of the present invention.

Referring to FIG. 7 (a), the controller 180 currently outputs a navigation map 301 and a route guide through the touchscreen 151. If the road traffic information is received in the step S603, referring to FIG. 7 (b), the controller 180 outputs an indicator 702 (e.g., a red line output along an outline of the touchscreen) indicating that the road traffic information has been received and can also output a guide text 701 that guides the road traffic information. In particular, the guide text 701 shown in FIG. 7 (b) contains a content notifying that that an accident occurred ahead and a content notifying that a route will be changed. Further, the output notification of the accident can be output under a specific condition only. For instance, if an accident occurs ahead in a progress direction of a car in consideration of the progress direction of the car or a car sped exceeds a preset speed (e.g., a speed over 100 km/h), the notification is output to warn the danger of the accident. This helps the user to determine an accident situation more accurately by attaching a video.

According to one embodiment of the present invention, as mentioned in the foregoing description with reference to the step S604, when the road traffic information is displayed on the navigation map, a pinpoint indicator 704 is provided to a location information of an accident spot. Yet, an indicator of one embodiment of the present invention is non-limited by the pinpoint indicator form. For example, indicators of other types are applicable in specifying locations on a map.

Referring to FIG. 7 (b), the mobile terminal 100 outputs a pinpoint indicator 704 to a location of an accident spot on the output navigation 703. In this instance, the controller 180 can determine the location of the accident spot based on the location information contained in the road traffic information mentioned in the foregoing description. Meanwhile, according to one embodiment of the present invention, in outputting the pinpoint indicator 704, the pinpoint indicator 704 is displayed in a different manner depending on reliability. For instance, a size of a pinpoint itself is changed depending on reliability.

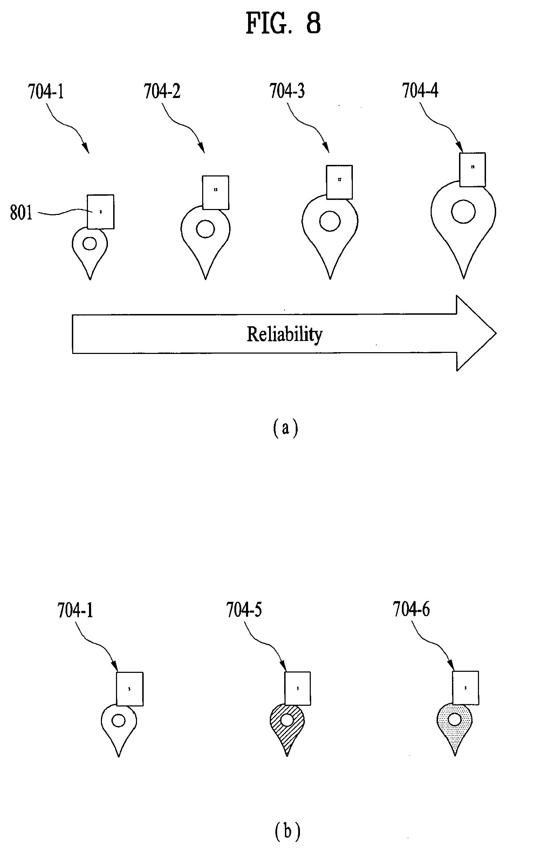

In particular, FIG. 8 is a diagram illustrating one example of marking a size and reliability of a pinpoint according to one embodiment of the present invention. Referring to FIG. 8 (a), first to fourth pinpoint indicators 704-1 to 704-4 are currently output. Assume that reliability increases in ascending order from the first pinpoint indicator 704-1 to the fourth pinpoint indicator 704-4. In particular, according to one embodiment of the present invention, a larger indicator indicates a road traffic information has a higher reliability.

In this instance, the reliability is an index for indicating how much the corresponding road traffic information is reliable and can be handled as a reliability point. The reliability point may be determined depending on a reliability of a terminal of a sharer side that allows the corresponding road traffic information to be shared. For instance, an indicator of an accident sport shared by a terminal having a reliability point set to 10 can have a size larger than that of an indicator of an accident spot shared by a terminal having a reliability point set to 1.

The reliability of the sharer side terminal may be determined in consideration of a history of the road traffic information shared in the past through the corresponding terminal. In this instance, if the sharer side terminal logs in to a specific SNS account (e.g., Android^{™} OS (Operating System) account of Google^{™}, iPhone Operation System (IOS^{™}) of Apple^{™}, etc.), the controller 180 can determine the reliability of the sharer side terminal in consideration of a history of the road traffic information shared using the corresponding account. In particular, if the same account is used, although a plurality of terminals are used, the controller 180 can recognize that the terminals are used by the same user. Thus, the reliability cumulated by a user of an account 'A' in a first terminal can be continuously applied in case of logging in to the account 'A' in a second terminal. According to an embodiment mentioned in the following description, the expression of reliability of a terminal itself is used, which can be understood as the concept of including reliability on an account created at the corresponding terminal.

Reliability of each terminal may be saved by being cumulated each time a road traffic information is shared. According to one embodiment of the present invention, if a sharer side terminal shares a road traffic information, a reference for determining accuracy of the shared road traffic information is set in advance. If the accuracy is admitted, the reliability of the corresponding terminal is adjusted upward. If the accuracy is not admitted, the reliability of the corresponding terminal is adjusted downward. For instance, if a road traffic information previously shared by the corresponding terminal matches information of other terminals, the accuracy of the corresponding information is admitted and the reliability of the corresponding terminal is adjusted upward. Further, if a road traffic information previously shared by the corresponding terminal does not match information of other terminals, the accuracy of the corresponding information is not admitted and the reliability of the corresponding terminal can be adjusted downward. Namely, the reliability on the terminal having shared accurate information is raised but the reliability on the terminal having shared inaccurate information is lowered.

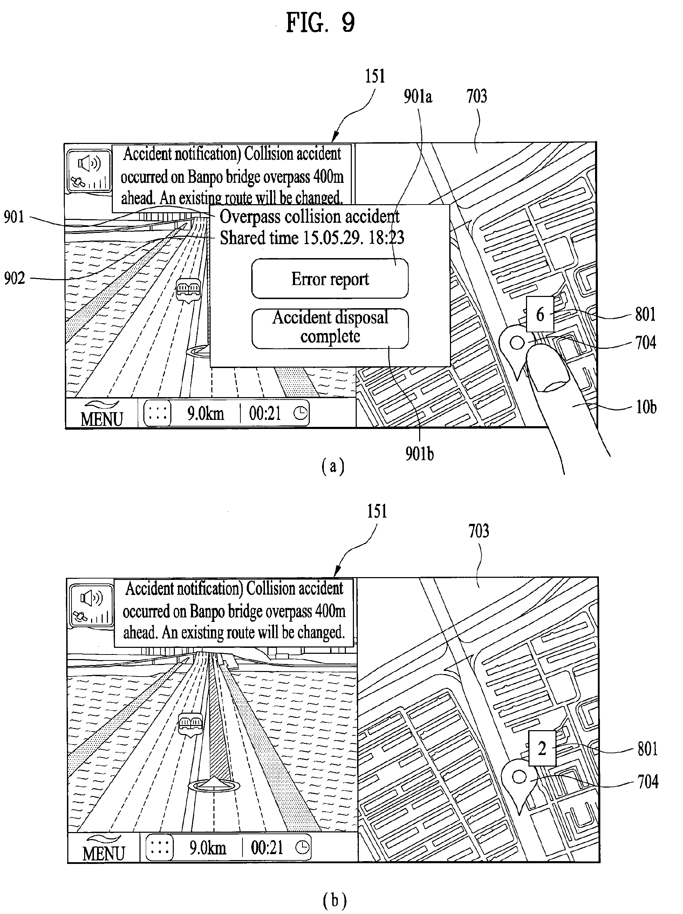

Furthermore, according to one embodiment of the present invention, the accuracy of the information is determined based on an evaluation made by a terminal (i.e., a reader side terminal) of a side of a reader who reads the information. Such an embodiment is described in detail with reference to FIG. 9 as follows.

In particular, FIG. 9 is a diagram illustrating a control method of evaluating accuracy in a reader side terminal according to one embodiment of the present invention. Referring to FIG. 9 (a) and (b), a pinpoint indictor 704 is output together with a navigation map 703.

A reader of a shared road traffic information checks the pinpoint indicator 704, thereby being able to confirm an adjacent accident spot. If a sharer shares an incorrect road traffic information for fun or by mistake, when a reader side visits the accident spot, the reader side can confirm that the road traffic information is incorrect. Moreover, for a considerable time afterward from the accident occurrence, the reader side may visit the accident spot after completion of accident disposal. In this instance, a control method of feeding back the corresponding information is required for the reader as well.

Therefore, according to one embodiment of the present invention, if an input 10b (e.g., an input of touching the pinpoint indicator 704 through the touchscreen, etc.) of selecting the pinpoint indicator 704 is received, a feedback menu 901 is displayed. According to one embodiment of the present invention, the feedback menu 901 includes at least one of an error report button 901a and an accident disposal complete button 901b. In this instance, in order to consider a time for sharing the road traffic information, the controller 180 can display information shared time 902 together with the feedback menu 901.

If the error repot button 901a is selected, the controller 180 of the reader side terminal transmits a feedback signal indicating that the shared information is inaccurate to the SNS server of the sharer side terminal. Having received the corresponding feedback signal, the SNS server or a different reader side terminal can adjust the reliability of the sharer side terminal having shared the inaccurate information downward. In particular, this is the control method for a reader to directly determine accuracy of a shared information and to feedback the determined accuracy.

Moreover, if several terminals share the same road traffic information, reliability on the corresponding information may be high. Hence, according to one embodiment of the present invention, depending on a result from collecting reliabilities of a plurality of terminals having uploaded road traffic information corresponding to the specific accident spot, the controller 180 can display the indicator by differentiating a size of the indicator. For instance, considering a plurality of road traffic information together, the controller 180 can display the indicator differing in size by adding up reliability points.

For instance, an indicator of an accident spot shared by a terminal having a reliability point set to 10 may have the same size of an indicator of an accident spot shared by two terminals each of which has a reliability point set to 5. Having received the feedback signal, as shown in FIG. 9 (a), the SNS server can display the indicator by differentiating a size of the indicator based on a result from excluding the reliability of the reader side terminal having transmitted the feedback signal. The reason for this is that the reader side terminal (i.e., a first reader side terminal) has fed back information indicating that the corresponding information is not correct. In particular, a second reader side terminal displays the indicator in a size based on the result from excluding the reliability of the first reader side terminal. If the corresponding result is smaller than 0, the second reader side terminal estimates that the corresponding information is an incorrect information and does not display the indicator at all.

In case of an accident disposal feedback, the controller 180 can adjust a size of an indicator by the aforementioned method based on the accident disposal complete button 901b. Yet, since the meaning of 'accident disposal is complete' may indicate that the information on the accident is not an incorrect information, it may be unnecessary to adjust the reliability of the sharer side terminal downward. Moreover, the reliability point can be displayed together with the indicator as shown in FIG. 8 (a).

Meanwhile, according to one embodiment of the present invention, an attribute of a road traffic information is provided in a color of an indicator. For instance, the road traffic information can indicate an occurrence of an accident, an accident disposal in progress, an accident disposal completion, or the like. Optionally, the accident occurrence, the road construction and the like can be displayed by being distinguished from each other. Therefore, according to one embodiment of the present invention, referring to FIG. 8 (b), a first color indicator 704-1 may indicate an occurrence of an accident, a second color indicator 704-5 may indicate an accident disposal in progress, and a third color indicator 704-6 may indicate an accident disposal completion. Colors and road conditions are exemplary, by which the present invention is non-limited.

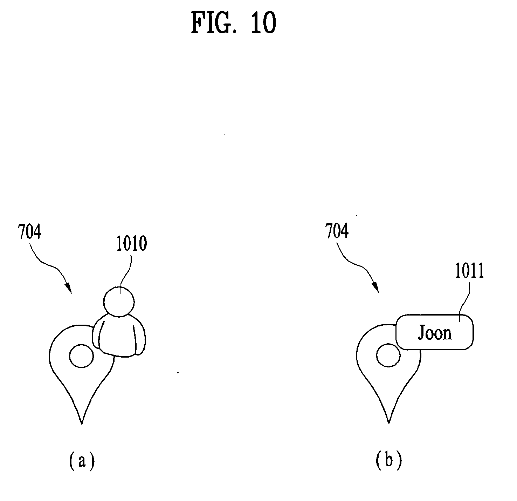

Meanwhile, if a person sharing a road traffic information is an acquaintance or a person belonging to a corresponding company, a reliability of the corresponding information may have a high level. Therefore, according to one embodiment of the present invention, if a road traffic information is uploaded through a specific account, a pinpoint indicator for the corresponding road traffic information is displayed identifiably. Such an embodiment is described in detail with reference to FIG. 10 as follows.

In particular, FIG. 10 is a diagram illustrating one example of identifiably displaying a road traffic information uploaded through a specific account according to one embodiment of the present invention. Referring to FIG. 10 (a), if a road traffic information is uploaded through a specific account (e.g., an account of a corresponding SNS company, an account of a road traffic management organization), an account indicator 1010 can be output together with a pinpoint indicator 704 therefor. In this instance, the account indicator 1010 is an indicator indicating that the corresponding information is uploaded through a preset specific account. Hence, a reader side may determine reliability of the information by checking that the corresponding information is uploaded through such an account.

Moreover, according to one embodiment of the present invention, a road traffic information uploaded by an acquaintance is identifiably output. The reason for this is that it can determine that the reliability of the information uploaded by the acquaintance is high. If an account for uploading a road traffic information matches a contact saved in the reader side mobile terminal 100, referring to FIG. 10 (b), the controller 180 can display a corresponding contact name 1011 together with the pinpoint indicator 704. In determining whether the account matches the contact, a phone number or an email ID registered at the account can be compared to those saved in the memory 170.

Moreover, according to one embodiment of the present invention, an indicator is displayed indicating that an accident spot is located on a road in a specific direction. When an accident occurs, it may happen that an accident non-occurring direction is not affected despite that an accident occurring direction is affected. Therefore, although an accident occurs at a specific spot, one direction is affected by the accident but the other direction may not be affected by the accident. Such a direction is important on a highway in particular.

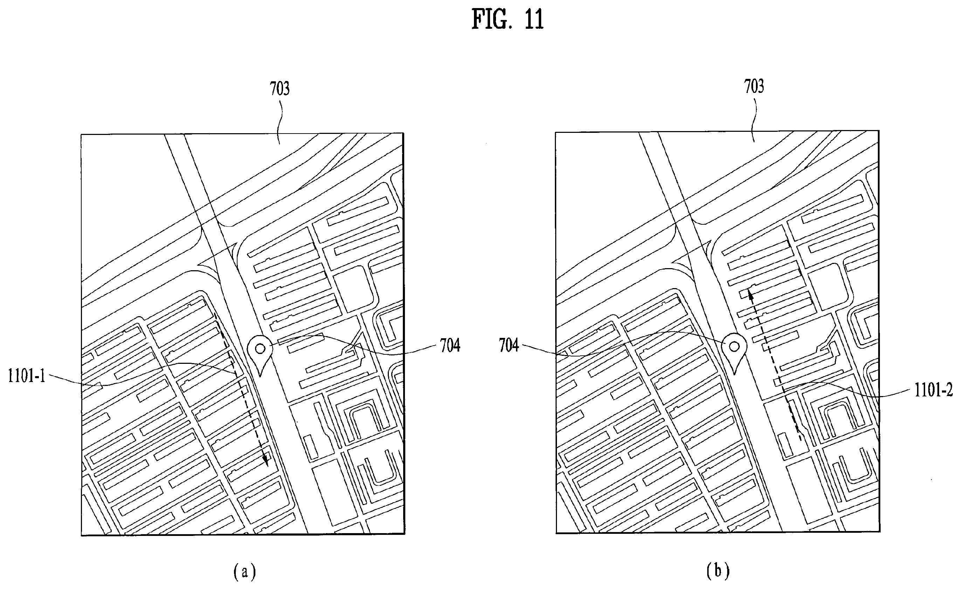

FIG. 11 is a diagram illustrating one example of an indicator indicating whether an accident occurs on a road toward a prescribed direction on a navigation map 703 according to one embodiment of the present invention. Referring to FIG. 11 (a) and FIG. 11 (b), a pinpoint indicator 704 indicating a presence of an accident occurrence at the same spot is currently output. If an accident occurs on a road in a top-to-bottom direction, referring to FIG. 11 (a), the controller 180 can further display a first direction indicator 1101-1 indicating the corresponding direction on the navigation map 703 together with the pinpoint indicator 704.

If an accident occurs on a road in a bottom-to-top direction, referring to FIG. 11 (b), the controller 180 can further display a second direction indicator 1101-2 indicating the corresponding direction on the navigation map 703 together with the pinpoint indicator 704. Further, if the two directions are affected by the accident, both of the first direction indicator 1101-1 and the second direction indicator 1101-2 can be displayed.

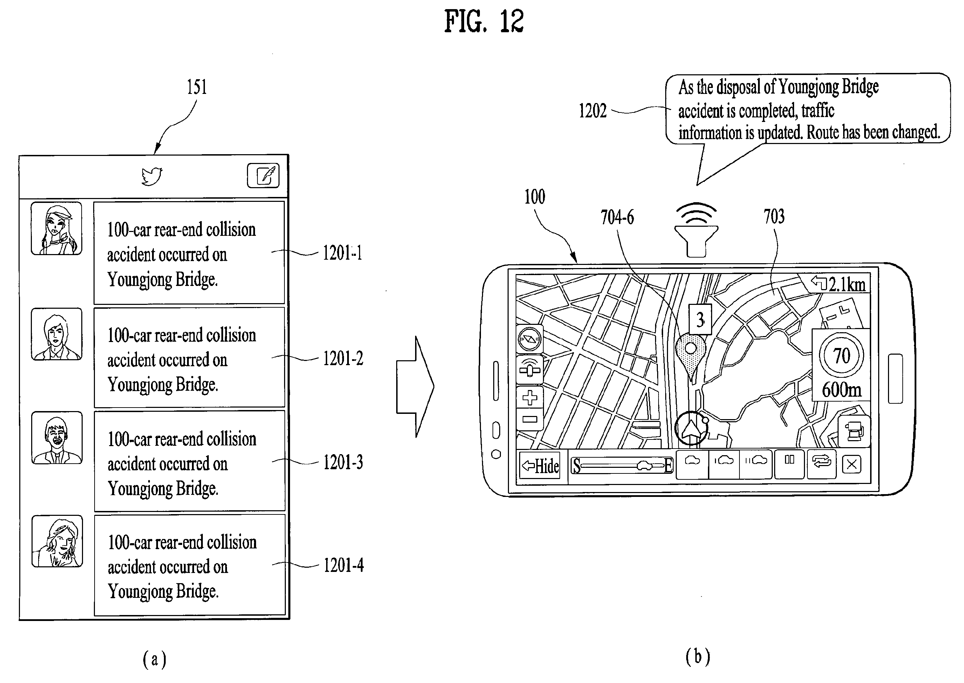

Meanwhile, according to the embodiment mentioned in the above description, the sharing of the road traffic information in case of an accident occurrence is described, by which the present invention is non-limited. Moreover, if an accident disposal is complete, such information can be shared. This is described in detail with reference to FIG. 12 as follows.

FIG. 12 is a diagram illustrating a control method of sharing a road traffic information on accident disposal according to one embodiment of the present invention. Referring to FIG. 12 (a), if a plurality of SNS posting items 1201-1 to 1201-4, each of which indicates that an accident has been disposed, are uploaded to an SNS server, the controller 180 recognizes the uploaded items and can reflect them in a navigation map. For instance, referring to FIG. 12 (b), the controller 180 can output a third color pinpoint 704-6, which indicates the completion of the accident disposal, to the navigation map 703.

Referring now to the flowchart shown in FIG. 6, in a step S606, the controller 180 changes a navigation guide route into an optimal route based on the received road traffic information and may be then able to guide a user through the changed route. So far, according to the above-described embodiment, the control method of sharing the road traffic information through the SNS server and utilizing the shared road traffic information is described. In the following description, a control method of receiving road traffic information through a traffic broadcast and utilizing the received road traffic information shall be described in detail.

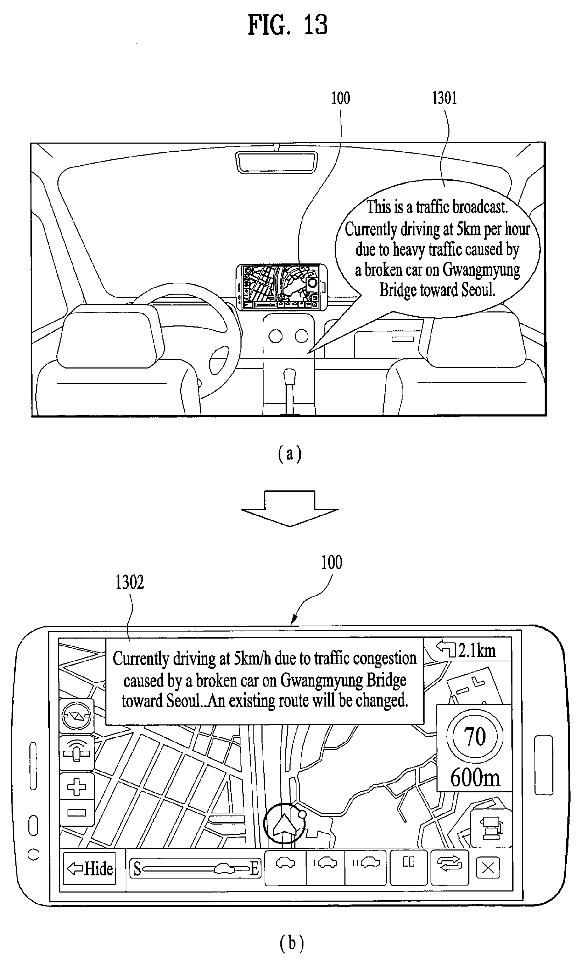

FIG. 13 is a diagram illustrating a control method of receiving a road traffic information based on a road traffic broadcast output through a radio of a car according to one embodiment of the present invention. Referring to FIG. 13 (a), if a road traffic broadcast 1301 is output through a radio module of a car, the controller 180 can recognize a corresponding radio broadcast. For instance, if an audio input is received through the microphone 122 and a specific text (e.g., 'This is a traffic broadcast.', etc.) is recognized, the controller 180 can recognize the audio input as a road traffic broadcast 1301.

If an accident information is acquired by recognizing the road traffic broadcast 1301, the controller 180 changes a navigation guide path into an optimal route based on the acquired accident information and may be then able to output a text 1302 that shows the optimal route (FIG. 13 (b)). According to the above-mentioned embodiment, the control method of receiving the traffic information by listening to and recognizing the road traffic broadcast 1301 output from the radio of the car is described, by which the present invention is non-limited. For instance, a traffic road information is separately received from a server or the like separately operated by a corresponding broadcasting station and the received road traffic information can be the reflected. In this instance, it is apparent that the road traffic information can be uploaded to the broadcasting station server by the aforementioned method of uploading information to the SNS server and not merely receiving the road traffic information.

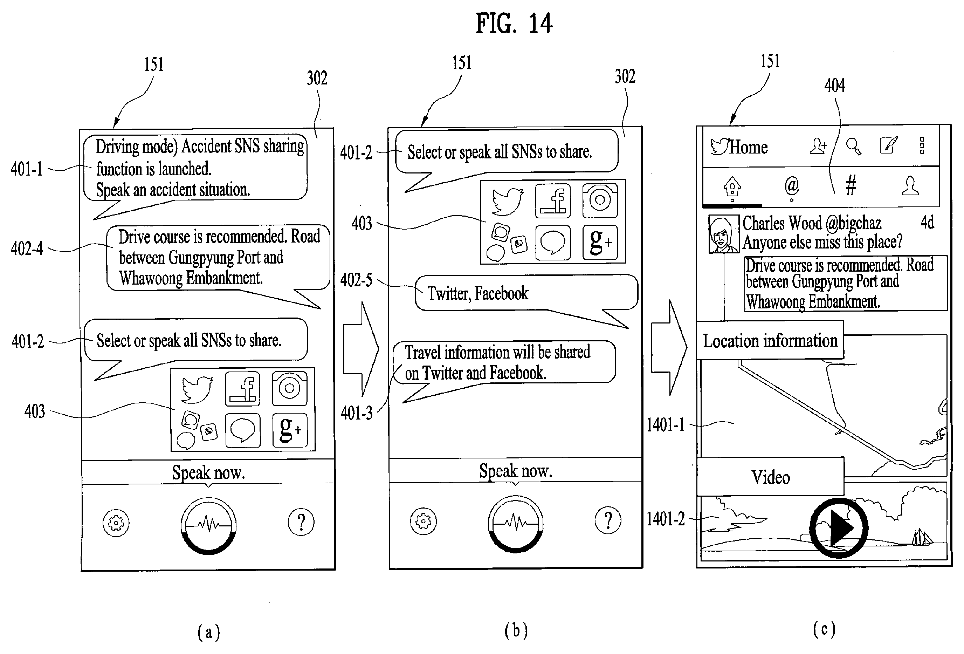

Meanwhile, according to one embodiment of the present invention, it is proposed to upload travel information to an SNS server as well as road traffic information. FIG. 14 is a diagram illustrating configuration of a control method of uploading travel information easily according to one embodiment of the present invention. First of all, while a car driver is traveling by driving a car, the car driver can desire to share information on a nice driving course, a nice restaurant and the like. Likewise, since it is difficult for a car driver to compose an SNS posting while driving a car, the car driver can upload the information based on voice recognition.

Referring to FIG. 14 (a), the mobile terminal 100 can output a voice command input chat window 302 through the touchscreen 151. If a user voice is input in response to a first guide text 401-1, the controller 180 recognizes the input voice and can then output a fourth user voice input text 402-4 by converting the recognized voice by TTS. In addition, the mobile terminal 100 can output an SNS list 403 together with a second guide text 401-2 that is an SNS specifying guide text for sharing SNS (FIG. 14 (a)).

If a voice command for specifying an SNS is received in response to the second guide text 401-2, the mobile terminal 100 outputs a text (i.e., a user input text) converting by TTS as a fifth user input voice text 402-5 (FIG. 14 (b)) and can upload a posting 404 to the specified SNS server (FIG. 14 (c)). In this instance, the posting 404 can contain at least one of a location information 1401-1 of the mobile terminal 100 and a black box image play screen 1401-2.

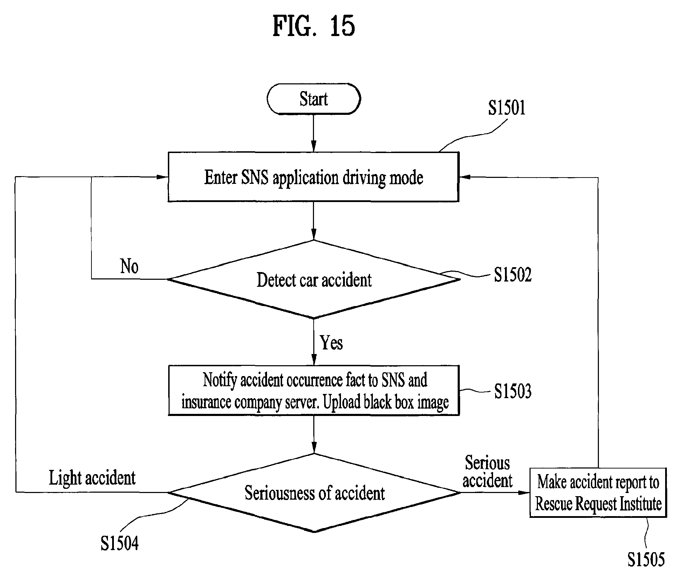

According to the embodiments described with reference to FIGs. 2 to 5, an accident occurrence situation is uploaded to an SNS server based on a user's touch input. However, if a car of a user has an accident, it may be difficult to share corresponding information due to a body injury and the like. Therefore, according to one embodiment of the present invention, a presence or non-presence of an accident occurrence is detected and an accident information is automatically uploaded based on the detection. Such an embodiment is described in detail with reference to the flowchart shown in FIG. 15 as follows.

FIG. 15 is a flowchart diagram illustrating a control method of uploading information on an accident automatically when detection of an occurrence of the corresponding accident according to one embodiment of the present invention. Referring to FIG. 15, in a step S1501, the controller 180 enters a driving mode of an SNS application. Since this driving mode is equal to the former driving mode in the step S201, its details are omitted from the following description.

In a step S1502, the controller 180 detects a car accident. If the car accident is not detected (No in S1502), the controller 180 can go back to the step S1501. If the car accident is detected (Yes in S1502), the controller 180 goes to a step S1503, notifies that the accident occurrence to an SNS and an insurance company server (e.g., an accident report system, etc.) automatically, and can upload a black box image.

According to one embodiment of the present invention, the car accident can be detected by receiving an impact signal from the sensing unit 140 of the mobile terminal 100, a black box image analyzer, a sensing unit of a black box device, and/or a collision detection sensor of a car. In particular, the collision detection sensor of the car may be usable for inflation of airbags. Further, a presence or non-presence of the inflation of the airbags (e.g., a signal reception from the aforementioned OBD terminal) is received by the mobile terminal 100, thereby being used to detect a car accident.

According to one embodiment of the present invention, the seriousness of an accident can be determined and the accident can be reported to a rescue request institute (e.g., 119 in Korea, 911 in U. S. A., etc.) (S1505). In particular, if the accident is determined as a serious accident, a rescue request is mage.

When the seriousness of an accident is determined, the controller 180 can make the determination by considering a car speed at the moment of the accident (e.g., a speed of a mobile terminal, etc.), a presence or non-presence of airbag inflation (using the aforementioned OBD terminal), and a shaken extent of a black box image. If it is determined that the accident is not serious in the step S1504, the routine may go back to the step S1501.

Accordingly, embodiments of the present invention provide several advantages. For example, traffic accident information can be easily shared between car drivers. Further, the reliability of traffic accident information shared between car drivers can be determined.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A mobile terminal (100) comprising:
a wireless communication unit (110) configured to communicate with at least one other terminal through a server;
a position location module (115) configured to detect a current location of the mobile terminal (100);
a touchscreen (151); and
a controller (180) configured to:
enter a driving mode and display a navigation screen including a route guide map on the touchscreen (151),
receive an traffic report through the server from the at least one other terminal, said traffic report including a location of an accident on the route guide map, and
display a location indicator indicating the location of the accident on the route guide map based on the received traffic,
wherein the location indicator is displayed with a display characteristic representing a reliability of the traffic report received from the at least one other terminal.

2. The mobile terminal of claim 1, wherein the controller (180) is further configured to set the reliability of the traffic report based on previous traffic reports from a specific account and display an account identifier identifying the specific account.

3. The mobile terminal of claim 2, further comprising:
a memory (170) configured to store a plurality of contacts,
wherein the account identifier is based on a corresponding contact stored in the memory (170).

4. The mobile terminal of any one of claims 1-3, wherein the controller (180) is further configured to display the location indicator with a display size in proportion to the reliability of the traffic report.

5. The mobile terminal of any one of claims 1-4, wherein the display characteristic of the location indicator is based on a collection result of reliabilities from a plurality of terminals having transmitted the traffic report to the mobile terminal.

6. The mobile terminal of any one of claims 1-5, wherein the controller (180) is further configured to adjust the reliability of the traffic report based on a feedback signal from a user viewing the traffic report.

7. The mobile terminal of any one of claims 1-6, further comprising:
a camera (121); and
a microphone (122),
wherein the controller (180) is further configured to:
receive a voice input concerning traffic around the mobile terminal (100),
convert the voice input into text data, and
upload the converted text data, the current location and an image photographed through the camera (121) to the server in response to a prescribed touch gesture received through the touchscreen (151).

8. The mobile terminal of claim 8, further comprising:
a sensing unit (140) configured to detect an impact on a car,
wherein the controller (180) is further configured to upload the photographed image in response to the impact on the car being detected.

9. A method of controlling a mobile terminal, the method comprising:
communicating, via a wireless communication unit (110), with at least one other terminal through a server;
detecting, via a position location module (115), a current location of the mobile terminal (100);
entering, via a controller (180), a driving mode and display a navigation screen including a route guide map on a touchscreen;
receiving, via the wireless communication unit (110), an traffic report through the server from the at least one other terminal, said traffic report including a location of an accident on the route guide map; and
displaying, via the touchscreen (151), a location indicator indicating the location of the accident on the route guide map based on the received traffic,
wherein the location indicator is displayed with a display characteristic representing a reliability of the traffic report received from the at least one other terminal.

10. The method of claim 9, further comprising:
storing, via a memory (170), a plurality of contacts;
setting the reliability of the traffic report based on previous traffic reports from a specific account; and
displaying an account identifier identifying the specific account on the touchscreen (151),
wherein the account identifier is based on a corresponding contact stored in the memory (170).

11. The method of claims 9 or 10, further comprising:
displaying the location indicator with a display size in proportion to the reliability of the traffic report.

12. The method of any one of claims 9-11, wherein the display characteristic of the location indicator is based on a collection result of reliabilities from a plurality of terminals having transmitted the traffic report to the mobile terminal (100).

13. The method of any one of claims 9-12, further comprising:
adjusting the reliability of the traffic report based on a feedback signal from a user viewing the traffic report.

14. The method of any one of claims 9-13, further comprising:
receiving, via a microphone (122), a voice input concerning traffic around the mobile terminal (100);
converting, via the controller (180), the voice input into text data;
capturing, via a camera (121), an image concerning traffic around the mobile terminal (100); and
uploading the converted text data, the current location and the image to the server in response to a prescribed touch gesture received through the touchscreen (151).

15. The method of claim 14, further comprising:
detecting, via a sensing unit (140), an impact on a car; and
uploading the photographed image in response to the impact on the car being detected.

## Amended claims

### Amended claims in accordance with Rule 137(2) EPC.

1. A mobile terminal (100) comprising:
a wireless communication unit (110) configured to communicate with at least one other terminal through a server;
a position location module (115) configured to detect a current location of the mobile terminal (100);
a touchscreen (151); and
a controller (180) configured to:
enter (S601) a driving mode and display (S602) a navigation screen including a route guide map on the touchscreen (151),
receive (S603) a traffic report through the server from a specific terminal among the at least one other terminal, the traffic report including a location of an accident on the route guide map, and
display (S604) a location indicator (704) indicating the location of the accident on the route guide map based on the received traffic,
wherein the location indicator (704) is displayed differently depending on a reliability of the traffic report received from the specific terminal,
wherein the reliability of the traffic report is set based on accuracy of previous traffic reports which are shared by an account of the specific terminal.

2. The mobile terminal (100) of claim 1, wherein the controller (180) is further configured to display an account identifier identifying the specific account.

3. The mobile terminal (100) of claim 2, further comprising:
a memory (170) configured to store a plurality of contacts,
wherein the account identifier is based on a corresponding contact stored in the memory (170).

4. The mobile terminal (100) of any one of claims 1-3, wherein the controller (180) is further configured to display the location indicator (704) with a display size in proportion to the reliability of the traffic report.

5. The mobile terminal (100) of any one of claims 1-4, wherein the display characteristic of the location indicator (704) is based on a collection result of reliabilities from a plurality of terminals having transmitted the traffic report to the mobile terminal (100).

6. The mobile terminal (100) of any one of claims 1-5, wherein the controller (180) is further configured to adjust the reliability of the traffic report based on a feedback signal from a user viewing the traffic report.

7. The mobile terminal (100) of any one of claims 1-6, further comprising:
a camera (121); and
a microphone (122),
wherein the controller (180) is further configured to:
receive a voice input concerning traffic around the mobile terminal (100),
convert the voice input into text data, and
upload the converted text data, the current location and an image photographed through the camera (121) to the server in response to a prescribed touch gesture received through the touchscreen (151).

8. The mobile terminal (100) of claim 8, further comprising:
a sensing unit (140) configured to detect an impact on a car,
wherein the controller (180) is further configured to upload the photographed image in response to the impact on the car being detected.

9. A method of controlling a mobile terminal (100), the method comprising:
communicating, via a wireless communication unit (110), with at least one other terminal through a server;
detecting, via a position location module (115), a current location of the mobile terminal;
entering (S601), via a controller (180), a driving mode and display (S602) a navigation screen including a route guide map on a touchscreen;
receiving (S603), via the wireless communication unit (110), a traffic report through the server from a specific terminal among the at least one other terminal, the traffic report including a location of an accident on the route guide map; and
displaying (S604), via the touchscreen (151), a location indicator (704) indicating the location of the accident on the route guide map based on the received traffic,
wherein the location indicator (704) is displayed differently depending on a reliability of the traffic report received from the specific terminal,
wherein the reliability of the traffic report is set based on accuracy of previous traffic reports which are shared by an account of the specific terminal.

10. The method of claim 9, further comprising:
storing, via a memory (170), a plurality of contacts;
setting the reliability of the traffic report based on previous traffic reports from a specific account; and
displaying an account identifier identifying the specific account on the touchscreen (151),
wherein the account identifier is based on a corresponding contact stored in the memory (170).

11. The method of claims 9 or 10, further comprising:
displaying the location indicator with a display size in proportion to the reliability of the traffic report.

12. The method of any one of claims 9-11, wherein the display characteristic of the location indicator is based on a collection result of reliabilities from a plurality of terminals having transmitted the traffic report to the mobile terminal (100).

13. The method of any one of claims 9-12, further comprising:
adjusting the reliability of the traffic report based on a feedback signal from a user viewing the traffic report.

14. The method of any one of claims 9-13, further comprising:
receiving, via a microphone (122), a voice input concerning traffic around the mobile terminal (100);
converting, via the controller (180), the voice input into text data;
capturing, via a camera (121), an image concerning traffic around the mobile terminal (100); and
uploading the converted text data, the current location and the image to the server in response to a prescribed touch gesture received through the touchscreen (151).

15. The method of claim 14, further comprising:
detecting, via a sensing unit (140), an impact on a car; and
uploading the photographed image in response to the impact on the car being detected.
